# FASCICULE DE BREVET EUROPEEN

(11) **EP 2 266 878 B1**
(45) Date de publication et mention de la délivrance du brevet: **29.08.2012**
(21) Numéro de dépôt: 10005837.9
(22) Date de dépôt: 07.06.2010
(51) Int. Cl.: B64C 27/56, B64C 27/68, G05D 1/08

(54) **Procédé d' aide au pilotage, moyen d'aide au pilotage et dispositif d' aide au pilotage d'un giravion utilisant ledit moyen d'aide au pilotage pour mettre en oeuvre ledit procédé d'aide au pilotage**
Steuerungshilfsverfahren, Steuerungshilfsmittel und Steuerungshilfsvorrichtung für einen Hubschrauber, wobei die Steuerungshilfsvorrichtung das Steuerungshilfsmittel zur Implementierung des Steuerungshilfsverfahren verwendet
Piloting assisting method, piloting assisting means and helicopter piloting assisting device which uses said piloting assisting means for implementing said piloting assisting method

(30) Priorité: 16.06.2009 FR 0902913
(43) Date de publication de la demande: 29.12.2010
(73) Titulaire: EUROCOPTER, 13725 Marignane Cédex (FR)
(72) Inventeur: Allieta, Jean-Marie, 13120 Gardanne (FR); Chaduc, Bruno, 13510 Eguilles (FR); Lafisse, Jean-François, 13008 Marseille (FR); Honnorat, Olivier, 13090 Aix en Provence (FR)
(74) Mandataire: Pouillot, Laurent Pierre Paul

(56) Documents cités:
- EP-A2- 1 037 130
- FR-A1- 2 708 112
- US-A- 4 345 195
- US-A- 5 489 830

## Description

La présente invention concerne un procédé d'aide au pilotage d'un giravion, et notamment d'un hélicoptère.

Classiquement, un giravion comporte communément un rotor principal de sustentation pourvu d'une pluralité de pales.

Les pales du rotor principal décrivent un cône très ouvert dont le plan de rotation est perpendiculaire à la portance générale générée par ce rotor principal. Cette portance générale du rotor principal peut alors être décomposée en une force verticale de sustentation et une force horizontale qui assure la translation de l'hélicoptère. Par suite, le rotor principal assure bien la sustentation du giravion.

De plus, sur un hélicoptère, en contrôlant la forme et l'inclinaison dudit cône par rapport au référentiel hélicoptère, un pilote peut contrôler l'avancement de l'hélicoptère et le diriger précisément.

Afin d'agir sur ce cône, on tend à faire battre les pales de façon à modifier leur inclinaison par rapport au plan d'entraînement du rotor principal, ce plan d'entraînement étant perpendiculaire au mât du rotor principal. En faisant varier le pas d'une pale, on modifie la portance qu'elle génère ce qui a pour conséquence un changement du battement de ladite pale.

Par suite, l'hélicoptère est pourvu de moyens spécifiques destinés à faire varier le pas de chaque pale, et par conséquent l'incidence aérodynamique de chaque pale par rapport au flux d'air incident traversé par la pale.

Afin de contrôler la portance générale du rotor principal, en intensité et en direction, le pilote de l'hélicoptère agit donc généralement sur la valeur de l'angle de pas de chaque pale en commandant une rotation de la pale autour de son axe longitudinal de pas. Ainsi, lorsque le pilote ordonne une variation collective de pas, c'est à dire une variation identique du pas de toutes les pales, ce pilote fait varier l'intensité de la portance générale du rotor principal de manière à contrôler l'altitude et la vitesse de l'hélicoptère.

A contrario, une variation de pas collectif est sans effet sur la direction de cette portance générale.

En effet, pour modifier la direction de la portance générale générée par le rotor principal, il convient d'incliner ledit cône en réalisant une variation non pas collective mais cyclique de pas. Dans ce cas de figure, le pas d'une pale varie en fonction de son azimut et passe durant un tour complet d'une valeur maximale à une valeur minimale obtenues dans des azimuts opposés.

La variation cyclique du pas des pales est à l'origine d'une variation cyclique de la portance des pales et donc de l'inclinaison du cône. En commandant la variation cyclique du pas des pales, le pilote contrôle l'assiette de l'aéronef et sa translation.

Les commandes de vol du pas, un levier de pas collectif et un manche cyclique, du pilote sont généralement reliées aux pales, via des liaisons mécaniques dénommées « timoneries » ou « chaînes cinématiques mécaniques », solidarisées au plateau non tournant d'un plateau cyclique. Le plateau tournant du plateau cyclique est lié mécaniquement à chaque pale par une bielle de commande de pas.

Plus précisément, des chaînes cinématiques primaires de roulis et de tangage relient le manche cyclique à un combinateur, ce combinateur étant lié au plateau non tournant du plateau cyclique par des chaînes cinématiques secondaires. De plus, le levier de pas collectif est relié à ce combinateur via une chaîne cinématique primaire collective. Dès lors, une commande de vol est reliée à un rotor par une chaine cinématique en roulis en tangage ou collective munie successivement d'une chaîne cinématique primaire puis d'une chaîne cinématique secondaire.

Un mouvement du manche cyclique induit un déplacement de la chaîne cinématique primaire de roulis ou de tangage et par suite de la ou les chaînes cinématiques secondaires correspondantes via le combinateur.

A contrario, un mouvement du levier de pas collectif induit un déplacement de la chaîne cinématique primaire collective puis des chaînes cinématique secondaires via le combinateur.

Néanmoins, les efforts à exercer étant importants, on dispose généralement une servocommande sur chaque chaîne cinématique secondaire. Par exemple, sur un hélicoptère de faible tonnage, on prévoit en principe une servocommande pour le pilotage en tangage dénommé « servocommande de tangage » par commodité et deux servocommandes de roulis gauche et droite pour le pilotage en roulis.

Lorsque le pilote souhaite modifier le pas collectif des pales, il agit sur son levier de pas collectif qui ordonne aux trois servocommandes de faire monter ou descendre l'ensemble du plateau cyclique, à savoir les plateaux non tournant et tournant de ce plateau cyclique.

Les bielles de commande de pas sont alors toutes déplacées de la même distance ce qui implique que le pas de toutes les pales varie du même angle.

A contrario, pour faire varier le pas cyclique des pales afin de diriger l'hélicoptère dans une direction donnée, le pilote ordonne alors le déplacement d'au moins une servocommande, en basculant son manche cyclique en conséquence dans la direction souhaitée.

Le plateau cyclique ne se déplace pas verticalement mais s'incline alors par rapport au mât du rotor principal. Chaque bielle de commande de pas est ainsi déplacée en fonction de l'objectif fixé ce qui génère une variation cyclique adéquate de pas de chaque pale.

Par ailleurs, les chaînes cinématiques sont pourvues d'au moins une bielle de liaison et d'au moins un moyen de renvoi pour relier les commandes de vol du pilote aux servocommandes. De plus, il est aussi prévu un déphaseur permettant au plateau cyclique de basculer autour de deux axes perpendiculaires pour les hélicoptères d'un tonnage important.

De même, les commandes de vol d'un hélicoptère comprennent un palonnier de commande en lacet lié à un rotor arrière par une chaîne cinématique en lacet passant par le combinateur.

Les chaînes cinématiques sont donc en générale très longue et lourde, particulièrement la chaîne cinématique de commande en lacet.

Les organes de ces chaînes cinématiques génèrent des efforts de friction pouvant s'avérer conséquents sur des chaînes cinématiques ayant des longueurs importantes. Le pilote peut dans ces conditions avoir des difficultés à déplacer le manche cyclique ou le levier de pas collectif compte tenu des efforts à appliquer.

Une première solution consiste à utiliser des commandes de vol électriques comme le suggère les documents W02005/002963 ou US2007/0102588. Néanmoins, cette première solution est difficile à implémenter, notamment sur les giravions existants.

Par suite, les hélicoptéristes ont remédié au problème posé en ajoutant des systèmes d'assistance, hydraulique ou pneumatique. Les systèmes d'assistance connus consistent en un bloc de vérins agissant comme un simple renvoi démultiplicateur d'un point de vue cinématique, ce bloc de vérins étant agencé par exemple entre des moyens de renvoi inférieurs et le combinateur par exemple.

Cependant, ces systèmes d'assistance sont encombrants et lourds. De plus, ils présentent des risques de fuite, hydraulique ou pneumatique, menants à une perte d'efficacité.

Enfin, les gaz des systèmes d'assistance pneumatique sont sensibles aux variations de température, malheureusement fréquentes dans l'aéronautique en particulier en raison des évolutions à altitudes variables, alors que les fluides utilisés par les systèmes d'assistance hydraulique possèdent des composés chimiques polluants.

De plus, les giravions comportent classiquement un système de pilotage automatique, pour stabiliser le giravion et / ou réduire la charge de travail du pilote.

L'agencement d'un système de pilotage automatique induit éventuellement la mise en place de vérins appelés « vérin série », disposés en série sur chaque chaîne cinématique entre une commande de vol et le rotor commandé.

Les vérins séries sont destinés à stabiliser le giravion. Ainsi, les vérins séries sont généralement très rapides et ont une faible autorité en amplitude.

Le document EP 1037130 présente un « vérin série » apte à être commandé par un calculateur pour stabiliser la machine.

Un capteur envoie des informations relatives à un ordre donné par un manche de commande au calculateur. Ce calculateur fait alors appel à des lois de pilotage pour commander le vérin série afin de stabiliser l'hélicoptère.

Par ailleurs, un vérin appelé « vérin parallèle » ou encore « vérin de trim » est disposé en parallèle de chaque chaîne cinématique.

A l'inverse des vérins séries, les vérins parallèles sont commandés par un moyen de pilotage automatique pour contrôler l'évolution de l'hélicoptère. Ainsi, les vérins parallèles sont généralement lents et ont une grande autorité en amplitude.

Le pilote automatique commande les vérins parallèles pour manoeuvrer le giravion.

De plus, les vérins parallèles servent d'ancrage aux vérins séries. En effet, le pilote automatique active en permanence les vérins séries pour stabiliser le giravion. Sans action complémentaire, les mouvements des vérins séries seraient répercutés aux commandes de vol du pilote.

En ancrant la commande de vol associée, ils empêchent la répercussion des mouvements des vérins séries sur les commandes de vol, le manche cyclique par exemple.

Les vérins parallèles servent aussi d'ancrage aux commandes de vol.

Selon une première variante, un vérin parallèle comporte un moteur apte à mettre en mouvement un arbre de sortie relié en parallèle à une chaîne cinématique. Entre le moteur et l'arbre de sortie, le vérin parallèle est notamment pourvu d'un réducteur, d'une boite à ressort générant une loi d'effort déterminée, et une goupille de sécurité.

Selon une autre variante décrite par le brevet FR 2718102, le vérin parallèle comporte notamment successivement un moteur, un réducteur réversible, un capteur de position, un dispositif de sécurité et un arbre de sortie.

Un moyen de commande activé par un pilote automatique commande alors le moteur pour générer une loi d'effort.

Selon le document US2005/0173595, le vérin parallèle est un actionneur apte à générer une loi d'effort en étant commandé par un moyen dédié.

Par ailleurs, on prévoit des amortisseurs sur les chaînes cinématiques pour raidir les commandes de vol en fonction de la vitesse de déplacement des commandes de vol.

Par suite, l'état de la technique fait état de giravions comprenant un dispositif d'aide au pilotage, pourvu notamment d'un bloc hydraulique et d'une pluralité de vérins séries et parallèles.

Un tel dispositif est donc nécessairement encombrant, lourd et onéreux.

La présente invention a alors pour objet de proposer un procédé d'aide au pilotage polyvalent permettant de s'affranchir des limitations mentionnées ci-dessus.

Selon l'invention, un procédé d'aide au pilotage d'un giravion, ce giravion comportant une commande de vol pour commander un rotor via au moins une chaîne cinématique, est remarquable en ce que l'on génère un effort complémentaire, à l'aide d'un moyen d'aide au pilotage lié mécaniquement à ladite au moins une chaîne cinématique, en étant agencé en parallèle de cette chaîne cinématique, en fonction d'un effort de consigne relatif à la position de la commande de vol et d'un effort instantané mesuré sur la chaîne cinématique.

Avantageusement, on applique ce procédé à chaque chaîne cinématique de commande, en disposant un moyen d'aide au pilotage en parallèle de chaque cinématique de commande.

Il est à noter qu'un moyen de pilotage automatique peut commander le moyen d'aide au pilotage pour lui faire remplir les fonctions des amortisseurs, et des vérins parallèle existants.

Ainsi, l'invention permet de remplacer les vérins parallèles, les amortisseurs et le bloc hydraulique mis en oeuvre par l'état de la technique par un moyen d'aide au pilotage. On comprend que l'architecture des commandes de vol en est simplifiée, et allégée.

En outre, en fonction de la position du manche de commande et de l'effort instantané mesuré, le moyen d'aide au pilotage agit sur la chaîne cinématique pour faciliter le travail du pilote quel que soit les frottements exercés sur cette chaîne cinématique.

Contrairement aux vérins parallèles existants qui sont plutôt d'un type passif en utilisant un ressort de torsion générant de fait un d'effort constant au cours du temps, l'invention prévoit un procédé actif prenant en compte l'effort réellement exercé sur la chaîne cinématique. Ainsi, même si les frottements exercés sur la chaîne cinématique augmentent avec l'usure de cette chaîne cinématique, le pilote n'aura pas à fournir des efforts supplémentaires pour les contrer, le moyen d'aide au pilotage les compensant.

Durant ce procédé, on procède aux étapes suivantes :
- on mesure en temps réel un effort instantané exercé sur ladite chaîne cinématique,
- on mesure la position de la commande de vol, un manche cyclique par exemple,
- à l'aide d'au moins une loi d'effort préétablie, on détermine un effort de consigne que doit ressentir un pilote manoeuvrant la commande de vol lorsque cette commande de vol est à la position mesurée, puis on détermine l'effort complémentaire égal à la différence entre l'effort de consigne et l'effort instantané,
- on détermine l'intensité de consigne du courant électrique à fournir au moyen d'aide au pilotage afin que le moyen d'aide au pilotage génère l'effort complémentaire, puis on alimente électriquement le moyen d'aide au pilotage selon ladite intensité de consigne.

Le procédé selon l'invention peut aussi comporter une ou plusieurs des caractéristiques additionnelles qui suivent. On change éventuellement la loi d'effort préétablie en fonction des conditions de vol.

Selon une première variante, la loi d'effort préétablie est changée manuellement par le pilote pour passer par exemple d'une loi d'effort de type ressort à une loi d'effort de type friction. Une telle loi d'effort de type ressort possède une précontrainte associée à un gradient d'effort à simple ou double pente, alors qu'une loi d'effort de type friction met en oeuvre un effort constant.

Selon une deuxième variante, la loi d'effort préétablie est changée automatiquement par un moyen de pilotage automatique.

Ainsi, il est possible de prévoir une loi d'effort ayant, dans un diagramme comportant la position de la commande de vol en abscisses et l'effort à fournir en ordonnées :
- l'aspect d'une droite munie d'une pente faible lorsque le giravion à une vitesse d'avancement faible à savoir en dessous de 50 noeuds par exemple, un noeud correspondant à 1,852 kilomètres par heure,
- l'aspect d'une droite munie d'une pente importante lorsque le giravion à une vitesse d'avancement importante à grande vitesse à savoir au dessus de 50 noeuds par exemple.

Selon une troisième variante, le moyen d'aide au pilotage comportant au moins un moteur apte à agir sur la chaîne cinématique pour générer un effort complémentaire :
- on mesure la vitesse de rotation du moteur électrique en dérivant la position angulaire de ce moteur électrique, et
- on change ladite loi d effort en fonction de ladite vitesse de rotation.

Par l'intermédiaire de ces changements de loi d'effort, on peut éviter d'implémenter un amortisseur sur la chaîne cinématique.

Par ailleurs, sur un giravion, il existe de nombreuses limitations que le pilote doit prendre en compte à chaque instant de vol.

La plupart des hélicoptères construits actuellement sont équipés d'un ou deux turbomoteurs, la puissance étant prélevée sur une turbine, éventuellement mécaniquement indépendant de l'ensemble du compresseur sur un turbomoteur à turbine libre. La turbine libre d'un turbomoteur tournant entre 20 000 et 50 000 tours par minute, une boîte de réduction est nécessaire pour la liaison à un rotor, dont le régime de rotation est sensiblement compris entre 200 et 400 tours par minute pour un rotor principal de sustentation: il s'agit de la boîte de transmission principale.

Les limitations prévues par le constructeur à prendre en compte par le pilote sont alors des limitations de la boîte de transmission principale et / ou des limitations du turbomoteur, une durée d'utilisation d'un régime de ce turbomoteur par exemple.

Dès lors selon une quatrième variante, on change la loi d'effort lorsque l'on atteint une desdites limitation, en passant d'une loi d'effort ayant une pente faible à une loi d'effort ayant une pente importante. La commande de vol du pilote est alors durcie. Ainsi, on informe le pilote qu'il atteint une limitation de l'installation motrice ou de la boîte de transmission principale.

Par ailleurs, un moyen d'aide au pilotage comportant une pluralité de broches de connexion aptes à accueillir une pluralité de connecteurs différents du giravion, le moyen d'aide au pilotage détermine ladite au moins une loi d'effort en fonction des broches connectées à un connecteur.

Un même moyen d'aide au pilotage peut ainsi être implémenté sur n'importe quelle chaîne cinématique, ce qui permet de standardiser ledit moyen d'aide au pilotage et donc de réduire les coûts de fabrication et d'achat de ce moyen d'aide au pilotage.

Par exemple, le moyen d'aide au pilotage peut être relié au circuit électrique du giravion via une broche munie d'un premier, d'un deuxième, d'un troisième et d'un quatrième orifices.

Ainsi, :
- si le connecteur coopère avec le premier orifice de ladite broche, le moyen d'aide au pilotage en déduit qu'il est lié à la chaîne cinématique en roulis et utilise les lois d'effort préétablies pour cette cinématique en roulis,
- si le connecteur coopère avec le deuxième orifice de ladite broche, le moyen d'aide au pilotage en déduit qu'il est lié à la chaîne cinématique en tangage et utilise les lois d'effort préétablies pour cette cinématique en tangage,
- si le connecteur coopère avec le troisième orifice de ladite broche, le moyen d'aide au pilotage en déduit qu'il est lié à la chaîne cinématique collective et utilise les lois d'effort préétablies pour cette cinématique collective, et
- si le connecteur coopère avec le quatrième orifice de ladite broche, le moyen d'aide au pilotage en déduit qu'il est lié à la chaîne cinématique en lacet et utilise les lois d'effort préétablies pour cette cinématique en lacet.

Avantageusement, l'effort complémentaire étant généré à l'aide d'au moins un moteur électrique sans balai du moyen d'aide au pilotage, on déconnecte le moteur électrique dès que la consommation électrique dépasse un seuil de fonctionnement prédéterminé. La déconnection peut être une déconnection électrique ou mécanique.

En effet, une consommation excessive de courant tend à indiquer que le moyen d'aide au pilotage est défectueux. On désolidarise donc le moteur électrique de la chaîne cinématique pour éviter un blocage de cette dernière.

Par ailleurs, on peut optionnellement déterminer l'intensité de consigne du courant électrique à fournir au moyen d'aide au pilotage selon une commande vectorielle à bande passante élevée.

Le moteur électrique est alors piloté en fonction d'un résultat à atteindre. La commande vectorielle via des transformations mathématiques permet de piloter dynamiquement la direction et l'intensité du champ magnétique et donc de piloter le couple et le sens de rotation de l'organe rotatif du moteur électrique, à savoir le rotor d'entraînement de ce moteur électrique.

L'utilisation d'une commande vectorielle à bande passante élevée permet de contrôler le couple en évitant la modulation du champ magnétique pour éviter les ondulations de couple ressenties par le pilote.

On se reportera à la littérature pour obtenir plus d'informations à ce sujet.

De plus, le giravion comportant un moyen de pilotage automatique apte à commander au moins un vérin série de la chaîne cinématique, ce moyen d'aide au pilotage ancre dynamiquement la commande de vol lorsque ce moyen de pilotage automatique commande le vérin série.

Ainsi, un ordre donné au vérin série ayant pour effet de stabiliser le giravion n'a pas d'influence sur la commande de vol. Le pilote ne perçoit pas au travers de sa commande de vol les extensions/rétractions du vérin série commandées par le moyen de pilotage automatique.

En effet, en ordonnant par exemple au moteur électrique du moyen d'aide au pilotage de rester dans une position donnée, le moyen de pilotage automatique ancre la commande de vol.

L'invention permet dès lors un ancrage dynamique des commandes de vol.

Il est à noter que la ou les lois d'effort du moyen d'aide au pilotage induisent de fait un ancrage mécanique, et de manière statique, de la commande de vol. Ainsi, un simple contact avec une commande de vol, entre le genou du pilote et un manche par exemple, ne génère pas un effort suffisant pour induire un mouvement de la chaîne cinématique associée.

Toutefois, on comprend qu'il reste possible d'ancrer mécaniquement ces commandes de vol, en instaurant des frottements mécaniques relativement importants dans des secteurs adéquats de la chaîne cinématique.

En complément, le giravion comportant un moyen de pilotage automatique, le moyen d'aide au pilotage ne génère pas un effort complémentaire lorsqu'il est commandé par le moyen de pilotage automatique.

Le pilote ne manoeuvrant pas son moyen de commande, le moyen d'aide au pilotage n'a pas à générer un effort complémentaire.

Par contre, si le pilote manoeuvre le moyen de commande afin de modifier l'effort instantané d'une valeur prédéterminée, on désengage le moyen de pilotage automatique pour que ce moyen de pilotage automatique ne commande plus le moyen d'aide au pilotage.

Quand le pilote agit sur sa commande de vol, l'effort instantané augmente ou diminue. La variation de cet effort instantané est donc immédiatement détectée. Le pilote ayant la priorité sur le moyen de pilotage automatique, on désengage alors ce moyen de pilotage automatique.

De plus, si le moyen de pilotage automatique est lié à au moins un vérin série de la chaîne cinématique pour stabiliser le giravion, dans un mode de secours ce dispositif de pilotage automatique commande le moyen d'aide au pilotage pour remplir la fonction stabilisation via un signal d'engagement spécifique relatif à un ordre de stabilisation.

Evidemment, la commande de vol associée n'est plus ancrée par le moyen d'aide au pilotage.

Par ailleurs, afin de vérifier le bon fonctionnement de la chaîne cinématique sur laquelle est agencé le moyen d'aide au pilotage :
- on détermine un effort généré par ledit moyen d'aide au pilotage à l'aide d'une loi de consommation électrique préétablie donnant ledit effort généré en fonction de la consommation électrique dudit moyen d'aide au pilotage,
- on détermine un effort de friction réel égal à la différence d'un effort instantané exercé sur ladite chaîne cinématique mesuré en temps réel et dudit effort généré,
- on détermine un effort de friction théorique de ladite chaîne cinématique à l'aide d'une loi de friction préétablie,
- on signale une anomalie quand ledit effort de friction réel dépasse ledit effort de friction théorique d'un seuil donné, par exemple dès que l'effort de friction réel est égal à deux fois ledit effort de friction théorique.

En outre, le moyen d'aide au pilotage comportant un moteur électrique commandé par un moyen de commande, ledit moyen de commande est avantageusement pourvu d'une unité de calcul principale et d'une unité de calcul de contrôle déterminant chacune ledit effort complémentaire. On désactive alors le moyen d'aide au pilotage si l'effort complémentaire déterminé par l'unité de calcul principale diffère de l'effort complémentaire déterminé par ladite unité de calcul de contrôle.

Plus précisément, l'unité de calcul principale gère le moteur électrique pour générer l'effort complémentaire, alors que l'unité de calcul de contrôle effectue une vérification et désactive le moyen d'aide au pilotage le cas échéant.

De plus, l'invention a aussi pour objet le moyen d'aide au pilotage apte à mettre en oeuvre le procédé selon l'invention, ce moyen d'aide au pilotage étant muni d'au moins un moteur électrique commandé par un moyen de commande, le moteur électrique étant lié à un arbre de sortie via successivement un réducteur puis un moyen fusible.

Le moyen fusible comporte alors :
- une première roue munie de dentures sur une périphérie externe qui coopèrent avec ledit réducteur et de crabots menant, lesdits crabots menant étant aptes à se déplacer axialement par rapport audit réducteur,
- des crabots menés, agencés sur ledit arbre de sortie, apte à coopérer avec lesdits crabots menants,
- une bobine électrique fixe pour attirer lesdits crabots menants contre lesdits crabots menés lorsqu'il est alimenté électriquement par un moyen de commande.

Il est à noter que deux configurations sont possibles :
- soit les crabots menant sont solidaires de ladite première roue, ladite première roue étant apte à se déplacer axialement par rapport au réducteur via des cannelures par exemple,
- soit les crabots menant sont aptes à se déplacer axialement par rapport à la première roue via des cannelures par exemple.

Ainsi, le moyen d'aide au pilotage permet de mettre en oeuvre le procédé précédemment décrit et remplace avantageusement un bloc hydraulique, un vérin parallèle et un amortisseur.

De plus, le moyen d'aide au pilotage peut comporter au moins un premier capteur de position apte à déterminer la position angulaire du moteur électrique, et/ ou au moins un deuxième capteur de position de l'arbre de sortie.

Ces premier et deuxième capteurs permettent tous deux de déterminer la position de la commande de vol commandant la chaîne cinématique équipée du moyen d'aide au pilotage.

En cas de défaillance du premier capteur, le deuxième capteur reste utilisable, et inversement.

De plus, si les premier et deuxième capteurs fournissent des informations contradictoires, le moyen de commande peut générer une alerte. Chaque type de capteur a son propre rôle, mais la comparaison des informations transmises constitue un moyen de surveillance de ces équipements.

En outre, les premier et deuxième capteurs sont avantageusement redondés, le dispositif d'aide au pilotage ayant dès lors deux premiers capteurs et deux deuxièmes capteurs. Le moyen de commande peut alors isoler aisément le capteur défectueux, à savoir le capteur donnant une information ne correspondant pas à l'information transmise par les trois autres capteurs.

Enfin, l'invention a aussi pour objet le dispositif d'aide au pilotage d'un giravion apte à mettre en oeuvre le procédé précédemment décrit, ce giravion étant pourvu d'une commande de vol pour commander un rotor via au moins une chaîne cinématique munie d'une pluralité de bielles incluant au moins une bielle intermédiaire et un moyen de liaison. Ce dispositif comporte alors :
- un capteur d'effort instantané agencé dans ladite bielle intermédiaire,
- un moyen de détermination de la position de ladite commande de vol,
- un moyen d'aide au pilotage selon l'invention ayant au moins un moteur électrique commandé par un moyen de commande pour entrainer un arbre de sortie, lié directement ou indirectement en parallèle de la chaîne cinématique à un moyen de liaison, ledit moyen d'aide au pilotage comportant au moins un premier capteur de position apte à déterminer la position angulaire dudit moteur électrique, et/ ou au moins un deuxième capteur de position de l'arbre de sortie.

Le dispositif selon l'invention limite donc les éléments nécessaires pour aider le pilote, ce qui optimise la masse de ce dispositif.

Le moyen d'aide au pilotage selon l'invention est rapide tout ayant une grande autorité. Par conséquent, il est parfaitement à même de remplir la fonction d'un vérin série classique.

Toutefois, ce dispositif d'aide au pilotage peut optionnellement comporter au moins un vérin série agencé entre le rotor et le moyen de liaison.

De plus, le dispositif d'aide au pilotage est éventuellement muni d'au moins un moyen de pilotage automatique apte à commander le moyen d'aide au pilotage et éventuellement le vérin série.

De plus, pour ancrer mécaniquement la commande de vol, le dispositif est optionnellement pourvu d'une unité de friction agencée entre la commande de vol et le vérin série pour générer un effort de friction supérieur à l'effort de friction de la chaîne cinématique entre le vérin série et le rotor, le cas échéant entre le vérin série et une servocommande.

Enfin, le giravion étant pourvu d'au moins deux chaînes cinématiques munies chacune d'une pluralité de bielles incluant au moins une bielle intermédiaire et un moyen de liaison, ce dispositif d'aide au pilotage comporte alors :
- un capteur d'effort instantané agencé dans ladite bielle intermédiaire de chaque chaîne cinématique,
- un moyen d'aide au pilotage selon l'invention par chaîne cinématique lié, en parallèle de la chaîne cinématique associée, au moyen de liaison.
En outre, le moteur électrique étant lié à un arbre de sortie via successivement un réducteur puis un moyen fusible, ledit moyen fusible comporte :
- une première roue munie de dentures sur une périphérie externe qui coopèrent avec ledit réducteur et de crabots menants sur une périphérie interne, lesdits crabots menant étant aptes à se déplacer axialement par rapport audit réducteur,
- des crabots menés, agencés sur ledit arbre de sortie, apte à coopérer avec lesdits crabots menants,
- une bobine électrique fixe pour attirer lesdits crabots menants contre lesdits crabots menés lorsqu'elle est alimentée électriquement par un moyen de commande.

L'invention et ses avantages apparaîtront avec plus de détails dans le cadre de la description qui suit avec des exemples de réalisation donnés à titre illustratif en référence aux figures annexées qui représentent :
- la figure 1, une vue d'un giravion muni d'un dispositif d'aide au pilotage selon l'art antérieur,
- la figure 2, un schéma montrant un dispositif d'aide au pilotage selon l'invention muni d'un moyen d'aide au pilotage rotatif,
- la figure 3, un schéma montrant un dispositif d'aide au pilotage selon l'invention muni d'un moyen d'aide au pilotage linéaire,
- la figure 4, un schéma explicitant le procédé selon l'invention,
- la figure 5, un schéma explicitant ledit moyen d'aide au pilotage,
- la figure 6, une vue éclatée du moyen fusible dudit moyen d'aide au pilotage, et
- la figure 7, une vue isométrique dudit moyen d'aide au pilotage.

Les éléments présents dans plusieurs figures distinctes sont affectés d'une seule et même référence.

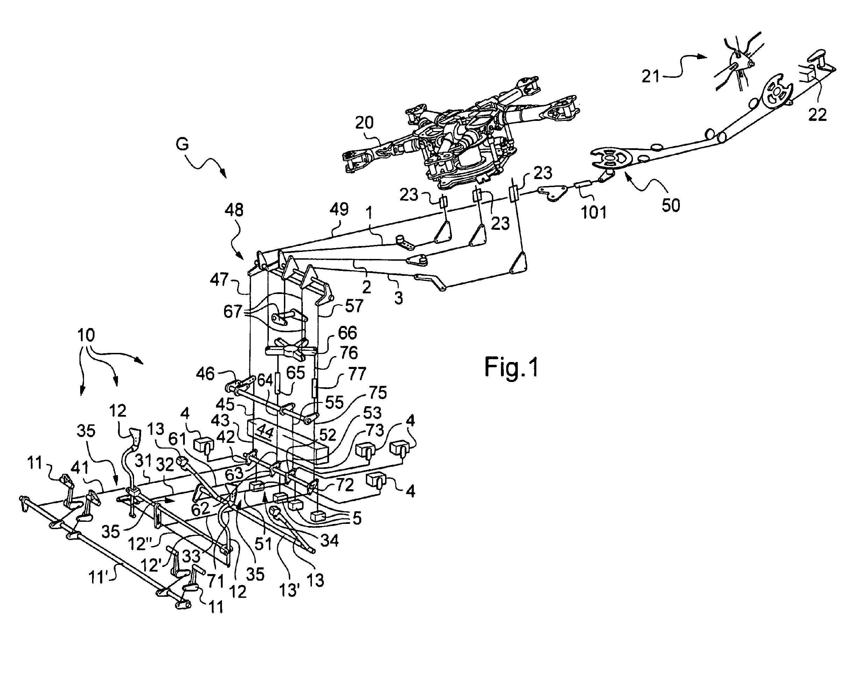

La figure 1 présente une vue d'un giravion G muni d'un dispositif d'aide au pilotage selon l'art antérieur.

Le giravion G possède des commandes de vol 10 reliées au rotor principal 20 de sustentation et d'avancement ainsi qu'au rotor arrière 21 par des chaînes cinématique 35. Notamment, les commandes de vol 10 comprennent deux palonniers 11 pour agir sur le pas des pales du rotor arrière 21 ainsi que deux manches cycliques 12 et deux leviers de pas collectif 13 pour modifier le pas des pales de son rotor principal 20 de sustentation ainsi que des pales de son rotor arrière 21.

Afin de contrôler le lacet du giravion G, les palonniers 11 sont alors reliés par un arbre de conjugaison en lacet 11', cet arbre de conjugaison en lacet 11' commandant une servocommande 22 pour modifier le pas des pales du rotor arrière 21 via une chaîne cinématique en lacet 31 comportant successivement :
- une première bielle inférieure 41,
- un moyen de renvoi 42,
- une deuxième bielle 43,
- un bloc hydraulique 44,
- une troisième bielle 45,
- un moyen de couplage pas collectif/ lacet 46,
- une quatrième bielle 47,
- un combinateur 48,
- une cinquième bielle 49, puis
- un système de commande 50 muni d'un câble de commande, et de poulies, et d'un vérin série 101 de stabilisation commandé par un calculateur d'un moyen de pilotage automatique.

De même, les leviers de pas collectif 13 sont alors reliés par un arbre de conjugaison en pas collectif 13', cet arbre de conjugaison en pas collectif 13' commandant les servocommandes 23 associées aux plateaux cycliques des pales du rotor principal 20 via une chaîne cinématique collective 34. Cette chaîne cinématique collective 34 comporte notamment successivement une première bielle 51, un moyen de renvoi 52, une deuxième bielle 53, un bloc hydraulique 44, une troisième bielle 55, un moyen de couplage pas collectif/ lacet 46, une quatrième bielle 57, un combinateur 48, des première, deuxième et troisième bielles supérieure 1, 2, 3.

En outre, les manches cycliques 12 sont interconnectés par un arbre de conjugaison en tangage 12' et un arbre de conjugaison en roulis 12".

Pour commander le giravion G en roulis, le pied d'un manche cyclique 12 est relié à des servocommandes 23 associées aux plateaux cycliques des pales du rotor principal 20 via une chaîne cinématique en roulis 32. Cette chaîne cinématique en roulis 32 comporte successivement une première bielle 61, un moyen de renvoi 62, une deuxième bielle 63, un bloc hydraulique 44, une troisième bielle 64 munie d'un vérin série 65 de stabilisation commandé par un calculateur d'un moyen de pilotage automatique, un déphaseur 66, trois cinquièmes bielles 67, un combinateur 48, des première, deuxième et troisième bielles supérieure 1, 2, 3.

Enfin, pour commander le giravion G en tangage, l'arbre de conjugaison en tangage 12' est relié à des servocommandes 23 associées aux plateaux cycliques des pales du rotor principal 20 via une chaîne cinématique en tangage 33. Cette chaîne cinématique en tangage 33 comporte successivement une première bielle 71, un moyen de renvoi 72, une deuxième bielle 73, un bloc hydraulique 44, une troisième bielle 75, une quatrième bielle 76 munie d'un vérin série 77 de stabilisation commandé par un calculateur d'un moyen de pilotage automatique, un déphaseur 66, trois cinquièmes bielles 67, un combinateur 48, des première, deuxième et troisième bielles supérieure 1, 2, 3.

Il est à noter que suivant les besoins et par sécurité, une pluralité de vérins série sont agencés sur une même chaîne cinématique.

Enfin, chaque chaîne cinématique est munie d'un vérin parallèle 4 et d'un amortisseur 5.

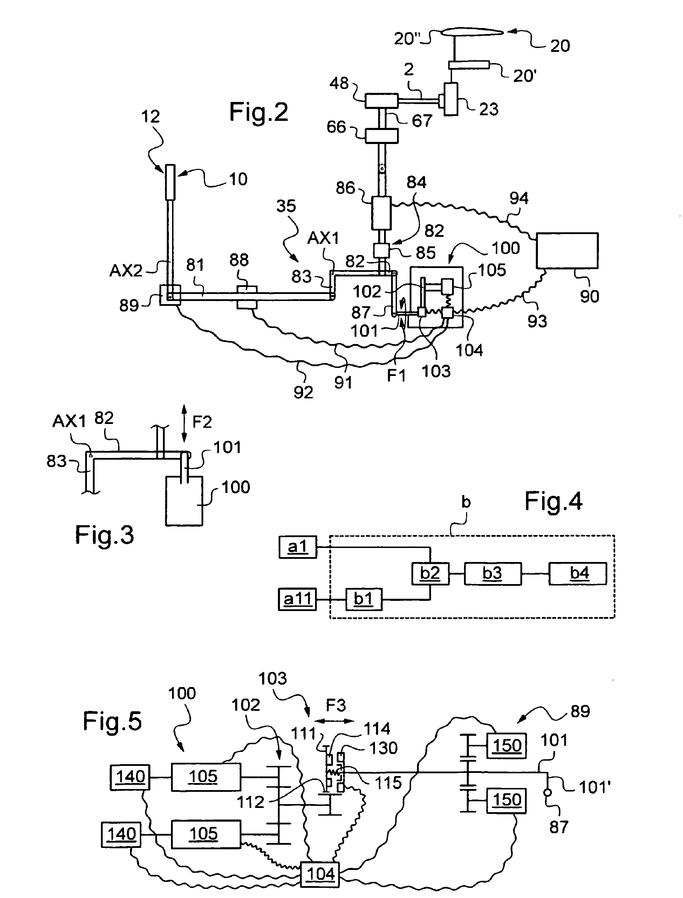

La figure 2 présente un schéma montrant un dispositif d'aide au pilotage selon l'invention muni d'un moyen d'aide au pilotage 100.

En effet, afin de modifier le pas d'une pale d'un rotor de giravion, un pilote utilise une commande de vol 10 relié à une servocommande 23 par une chaîne cinématique 35. La servocommande 23 modifie alors l'inclinaison d'un plateau cyclique 20' pour finalement engendrer une modification du pas de la pale 20 correspondant au besoin.

Selon l'invention, on agence sur chaque chaîne cinématique un unique moyen d'aide au pilotage 100, éventuellement assisté d'un vérin série 86. Par suite, contrairement à l'état de la technique connue, on n'utilise pas un vérin parallèle ainsi qu'au moins un vérin série et un amortisseur par chaîne cinématique assistés d'un bloc hydraulique mais tout au plus un moyen d'aide au pilotage 100 et au moins un vérin série 86.

Par exemple, le manche cyclique 12 des commandes vol 10 est relié par une chaîne cinématique 35, une chaîne cinématique en tangage par exemple, à une servocommande 23 apte à commander le plateau cyclique 20'.

Afin de relier la commande de vol 10 à une servocommande 23, la chaîne cinématique 35 comporte alors une bielle intermédiaire 81, un moyen de liaison 82 apte à effectuer un mouvement rotatif autour d'un premier axe de fixation AX1, une deuxième bielle secondaire 84 pourvue d'un moyen de friction 85 et d'au moins un vérin série 86, un déphaseur 66, une quatrième bielle 67, un combinateur 48, une bielle supérieure 2. Il est à noter que le moyen de liaison est muni d'une première branche 83 articulée à la bielle intermédiaire 81 et solidarisé à une première extrémité libre d'une deuxième branche 82 du moyen de liaison, cette deuxième branche 82 étant articulée à la deuxième bielle secondaire 84.

Eventuellement, le moyen de liaison peut comporter un organe triangulaire, deux côtés de cet organe triangulaire étant solidarisés aux première et deuxième branches pour former un moyen de liaison triangulaire.

De plus, le dispositif d'aide au pilotage comprend un moyen d'aide au pilotage 100, agencé en parallèle de la chaîne cinématique 35 en étant articulé à une deuxième extrémité libre de la deuxième branche 82 du moyen de liaison, directement ou par une tige de liaison 87.

Dès lors, le dispositif d'aide au pilotage est muni d'un capteur d'effort instantané 88 solidaire de la bielle intermédiaire 81. Par exemple, on utilise une bielle instrumentée ayant au moins un capteur d'effort de type jauge de contraintes connue mettant éventuellement en oeuvre un pont de Weston.

A titre de variante, un capteur de déplacement mesurant une déformation peut être envisagé.

De plus, un unique capteur pouvant s'avérer insuffisant fiable en fonction des contraintes de sécurité à respecter, la bielle instrumentée peut comporter trois capteurs d'efforts instantanés 88. En effet, l'agencement de deux capteurs ne serait à priori pas non plus satisfaisant dans la mesure où il serait difficile de déterminer quel capteur d'effort est défaillant en cas d'incohérence.

Le capteur d'effort instantané envoie alors en temps réel, par une première liaison filaire 91, une première information relative à l'effort instantané exercé sur la chaîne cinématique 35 à un moyen de commande 104 dudit moyen d'aide au pilotage.

En complément, le dispositif d'aide au pilotage possède un moyen de détermination 89 de la position de la commande de vol.

Selon la figure 2, ce moyen de détermination 89 comporte un capteur angulaire, par exemple agencé au pied du moyen de commande. Le capteur angulaire envoie alors en temps réel, par une deuxième liaison filaire 92, une deuxième information au moyen de commande 104 dudit moyen d'aide au pilotage.

On verra par la suite qu'à titre de variante, le moyen de détermination 89 de la position de la commande de vol 10 est intégré au moyen d'aide au pilotage 100.

Enfin, la figure 2 fait apparaître un moyen de pilotage automatique apte à commander le moyen de commande 104 du moyen d'aide au pilotage 100 et le vérin série 86, respectivement via des troisième et quatrième liaisons filaires 93, 94.

Ainsi, en fonction du besoin, le moyen de commande 104 ordonne au moteur électrique 105 d'effectuer une rotation. Ce moteur électrique entraine, via un réducteur 102 et un moyen fusible 103, la rotation d'un arbre de sortie 101. La rotation de l'arbre de sortie 101 selon la double flèche F1 induit finalement la translation de la tige de liaison 87 selon son axe longitudinal puis un basculement de la deuxième branche 82 du moyen de liaison autour de son premier axe de rotation AX1.

En référence à la figure 3, selon une autre réalisation, le moyen d'aide au pilotage est un moyen d'aide au pilotage linéaire.

Le moteur électrique 105 de ce moyen d'aide au pilotage induit non pas une rotation mais une translation de l'axe de sortie 101 selon son axe d'extension / rétraction conformément à la double flèche F2.

Il n'est alors pas utile de prévoir une tige de liaison entre l'arbre de sortie et la deuxième branche 82.

Indépendamment de la variante mise en oeuvre, en fonction de l'effort instantané mesuré par le capteur d'effort instantané 88 et de la position de la commande de vol déterminée par le moyen de détermination 89, le moyen de commande 104 du moyen d'aide au pilotage 100 génère un effort complémentaire sur la chaîne cinématique 35 en déplaçant la deuxième branche 82.

En fonction du besoin, le moyen d'aide au pilotage bloque la commande de vol en générant un effort complémentaire résistant ou aide le pilote à déplacer la chaîne cinématique.

Par exemple, si la commande de vol et le moyen d'aide au pilotage tendent à générer tous deux une rotation du moyen de liaison autour du premier axe de fixation dans un même sens, alors l'effort complémentaire tend à aider le pilote.

Par contre, si la commande de vol et le moyen d'aide au pilotage tendent à générer tous deux une rotation de la deuxième branche du moyen de liaison autour du premier axe de fixation dans des sens différents alors l'effort complémentaire est un effort complémentaire résistant qui tend à bloquer la commande de vol.

Par ailleurs, lorsque le moyen de pilotage automatique 90 ordonne au vérin série de s'étendre ou de se rétracter, le moyen d'aide au pilotage compense le mouvement généré par le vérin série via sa logique d'asservissement pour ancrer la commande de vol.

En outre, lorsque le pilotage automatique 90 est activé, ce moyen de pilotage automatique 90 commande le moyen d'aide au pilotage 100 en se substituant au pilote. Par suite, il devient inutile de générer un effort complémentaire pour aider le pilote.

Par contre, dès que le pilote reprend en main la commande de vol 10, il désactive automatiquement le moyen de pilotage automatique.

Plus précisément, en manoeuvrant la commande de vol 10, le pilote va augmenter ou baisser sensiblement l'effort instantané mesuré par le capteur d'effort instantané 88. Dès que le moyen de commande 104 perçoit une variation de l'effort instantané supérieure ou égale à un seuil prédéterminé, le moyen de commande 104 demande le désengagement du moyen de pilotage automatique 90.

Par ailleurs, lorsque le moyen de pilotage automatique 90 ordonne au vérin série de s'étendre ou de se rétracter, le moyen d'aide au pilotage 100 ancre dynamiquement la commande de vol 10. Les mouvements du vérin série 86 n'entrainent donc pas un mouvement parasite de la commande de vol.

Il est à noter que le moyen d'aide au pilotage peut ancrer mécaniquement et de manière statique la commande de vol.

En effet, il suffit que le coefficient de friction entre deux organes mobiles du moyen d'aide au pilotage 100, par exemple entre le réducteur et le moteur électrique 105, soit supérieur au coefficient de friction des éléments de la chaîne cinématique compris entre le vérin série 86 et l'entrée de la servocommande 23.

A titre de variante non obligatoire, en référence à la figure 2, il est possible de prévoir une unité de friction 85 dédiée à cet effet entre le vérin série 86 et la commande de vol 10, par exemple sur la deuxième bielle secondaire 84.

La figure 4 présente un schéma explicitant plus en détail le procédé selon l'invention.

Durant une étape a1), réalisée en temps réel, on mesure l'effort instantané supporté par la chaîne cinématique 35, à l'aide du capteur d'effort instantané 88.

Durant une étape a11), réalisée en temps réel concomitamment à l'étape a1), on mesure la position de la commande de vol 10, à l'aide du moyen de détermination 89 de la position.

Enfin durant une étape b), on génère un effort complémentaire en fonction de la mesure de l'effort instantané et de la position de la commande de vol 10.

Favorablement, durant une étape b1) le moyen de commande 104 détermine un effort de consigne à appliquer dans la chaîne cinématique pour la position de la commande de vol 10 mesurée au cours de l'étape a11).

A cet effet, le moyen de commande 104 fait appel à une loi d'effort préétablie. Concrètement, la loi d'effort est donnée par une courbe dans un diagramme donnant la position de la commande de vol en abscisses et l'effort de consigne en ordonnées.

Une telle loi d'effort peut notamment correspondre à la loi d'effort induite par les ressorts de torsion mis en oeuvre par l'état de la technique.

Selon une variante de l'invention, le moyen de commande 104 dispose d'une pluralité de lois d'effort. Ainsi, le moyen de commande 104 est en mesure de déterminer automatiquement la loi d'effort à utiliser en fonction de règles prédéterminées, relatives éventuellement aux conditions de vol.

Par exemple, le moyen de commande 104 détermine sur quelle chaîne cinématique 35 il est agencé, et choisit la ou les lois d'effort prédéterminées correspondant à cette chaîne cinématique.

A cet effet, chaque connecteur devant être relié à un lot de broches du moyen d'aide au pilotage 100, le moyen de commande 104 détermine éventuellement par quel type de connecteur il est relié au circuit électrique du giravion en déterminant le lot de broches mis en oeuvre. En fonction du connecteur utilisé, le moyen de commande détermine la ou les lois d'effort pertinentes.

En outre, le moyen de commande 104 passe d'une loi d'effort ayant une pente faible à une loi d'effort ayant une pente importante, et inversement, en fonction de la vitesse de déplacement de la commande de vol 10. A cet effet, le moyen de commande 104 détermine la vitesse de rotation du moteur électrique 105 en dérivant la position angulaire de ce moteur électrique, obtenue via un premier capteur de la position angulaire du moteur électrique. En fonction de la vitesse de rotation obtenue, le moyen de commande 104 change de loi d'effort.

Dès lors, le moyen d'aide au pilotage 100 peut favorablement remplacer les amortisseurs utilisés par l'état de la technique connu.

De la même manière, le moyen de commande 104 peut sélectionner une loi d'effort ayant une très forte pente pour que le moyen d'aide au pilotage remplisse le rôle d'une butée dynamique. Par conséquent, l'effort complémentaire fourni par le moyen d'aide au pilotage 100 est un effort complémentaire résistant qui tend à empêcher le pilote de manoeuvrer sa commande de vol.

Selon une autre variante, le pilote peut ordonner le passage d'une loi d'effort à une autre à l'aide d'un moyen de sélection dédié.

Durant une étape b2) de l'étape b), le moyen de commande 104 détermine un effort complémentaire à fournir, ledit effort complémentaire étant égal à la différence entre l'effort de consigne et l'effort instantané.

Ensuite, au cours d'une étape b3) de l'étape b), à l'aide d'une table de conversion, le moyen de commande 104 détermine l'intensité de consigne à fournir au moteur électrique 105, et le sens de rotation de ce moteur électrique 105, afin que le moyen d'aide au pilotage 100 puisse générer l'effort complémentaire requis. Une méthode mettant en oeuvre une commande vectorielle à bande passante élevée est favorablement mise en oeuvre.

Enfin, durant une étape b4), le moyen de commande 104 alimente le moteur électrique avec un courant électrique ayant ladite intensité de consigne.

Par ailleurs, il est avantageux que le moyen de commande 104 surveille la consommation électrique du moteur électrique 105. En effet, si le moyen de commande 104 détecte une surconsommation, le moyen de commande 104 ordonne au moyen fusible 103 de désolidariser le moyen d'aide au pilotage 100 de la chaîne cinématique, en désolidarisant le moteur électrique 105 de l'arbre de sortie 101. Le moyen de commande 104 peut signaler le défaut à un organe de surveillance du giravion.

La figure 5 présente un schéma présentant un moyen d'aide au pilotage 100 muni de deux moteurs électriques 105 par sécurité.

En fonctionnement normal, les moteurs électriques entrainent conjointement, à parts égales, le réducteur 102. Par contre, en cas de panne d'un des moteurs électriques 105, le réducteur 102 est mis en mouvement par le moteur électrique 105 en état de marche.

Sous l'action des moteurs électriques 105, le réducteur 102 est apte à entrainer en rotation un moyen fusible 103 solidaire de l'arbre de sortie 101.

L'extrémité libre de l'arbre de sotie 101 met alors en rotation une manivelle 101' articulée à une tige de liaison 87.

En outre, le moyen d'aide au pilotage 100 est pourvu d'un premier capteur de position 140 usuel par moteur électrique. Les premiers capteurs de position 140 transmettent des informations relatives à la position angulaire des moteurs électriques associés au moyen de commande 104, une carte électronique par exemple.

De plus, le moyen d'aide au pilotage 100 est pourvu d'au moins un deuxième capteur de position 150 de l'arbre de sortie 101. Les deuxièmes capteurs de position 150 transmettent des informations relatives à la position angulaire de l'arbre de sortie 101.

Les premier et deuxième capteurs de position font alors partie du moyen de détermination 89 de la position de la commande de vol 10.

Une telle variante permet d'éviter l'implémentation d'un capteur angulaire sur la commande de vol par exemple, à l'inverse de la version représentée sur la figure 2.

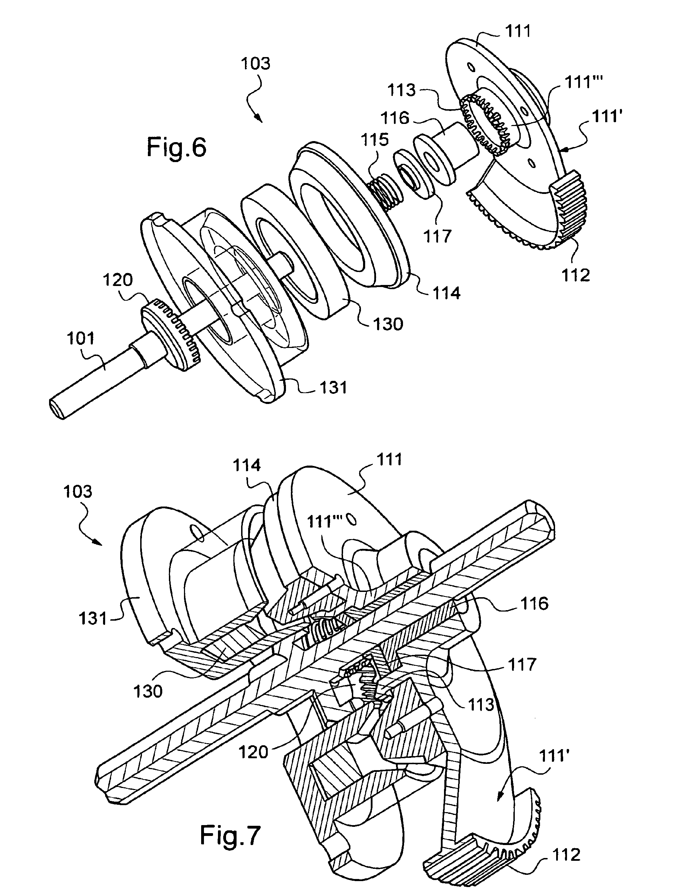

Par ailleurs, en référence aux figures 5 à 7, le moyen fusible 103 est pourvu d'une première roue 111 munie de dentures 112 sur sa périphérie externe 111'. Les dentures 112 de la première roue coopèrent alors avec le réducteur 102 via des cannelures.

De plus, la périphérie interne 111" de la première roue 111 est solidaire de crabots menants 113. Une plaque ferrique 114 est alors solidarisée à la première roue 111 en étant agencée entre les périphéries interne 111" et externe 111' de la première roue 111.

En outre, le moyen fusible 103 possède des crabots menés 120 solidaires de l'arbre de sortie 101. Un support 131 est dès lors solidarisé aux crabots menés afin de soutenir une bobine électrique 130 commandée par le moyen de commande 104.

Un palier 116, une rondelle de friction 117 et un ressort 115 sont alors disposés autour de l'arbre de sortie entre les crabots menants 113 et menés 120.

Dans ces conditions, le ressort tend à éloigner les crabots menant 113 des crabots menés 120 afin de désolidariser la première roue 111, et donc les moteurs électriques 105, de l'arbre de sortie 101.

Selon la configuration représentée, la première roue 111 se déplace le long de cannelures du réducteur.

Selon une configuration alternative, les crabots menant sont liés à la partie interne de la première roue par des cannelures. La plaque ferrique étant alors solidarisée aux crabots menant et non pas à la première roue, les crabots menant peuvent dès lors se déplacer axialement par rapport à la première roue.

Par contre, lorsque le moyen de commande 104 alimente la bobine 130 en courant électrique, cette bobine 130 génère un champ magnétique qui attire la première roue 111 vers la bobine 130 malgré l'effort résistant du ressort 115. La première roue 111 se déplace le long de l'arbre de sortie, tout en restant solidaire en rotation du réducteur 102, jusqu'à ce que les crabots menants 113 engrènent les crabots menés 120.

Enfin, le moyen de commande 104 est avantageusement muni d'une unité de calcul principale apte à commander au moins un moteur électrique et d'une unité de calcul de contrôle, ces unités de calcul comprenant des microprocesseurs par exemple.

L'unité de calcul principale réalise de multiples opérations pour délivrer des ordres afin de commander les différents organes du moyen d'aide au pilotage. L'unité de calcul de contrôle réalise alors les mêmes opérations que l'unité de calcul principale et vérifie qu'elle obtient les mêmes ordres. En cas d'incohérences, l'unité de calcul de contrôle désactive le moyen d'aide au pilotage et en informe le pilote.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé d'aide au pilotage d'un giravion, ledit giravion comportant une commande de vol (10) pour commander un rotor (20, 21) via au moins une chaîne cinématique (35),
au cours duquel, pour générer un effort complémentaire à l'aide d'un moyen d'aide au pilotage (100) agencé en parallèle de ladite chaîne cinématique (35) ainsi qu'en fonction d'un effort de consigne relatif à la position de ladite commande de vol (10) et d'un effort instantané mesuré sur ladite chaîne cinématique (35) :
- on mesure en temps réel un effort instantané exercé sur ladite chaîne cinématique (35),
- on mesure la position de ladite commande de vol (10),
- à l'aide d'au moins une loi d'effort préétablie, on détermine un effort de consigne que doit ressentir un pilote manoeuvrant ladite commande de vol (10) lorsque cette commande de vol (10) est à ladite position mesurée, puis on détermine ledit effort complémentaire égal à la différence entre l'effort de consigne et l'effort instantané,
- on détermine l'intensité de consigne à fournir audit moyen d'aide au pilotage (100) afin que ledit moyen d'aide au pilotage (100) génère ledit effort complémentaire, puis on alimente électriquement ledit moyen d'aide au pilotage (100) selon ladite intensité de consigne.

2. Procédé selon la revendication 1,
**caractérisé en ce que** l'on change la loi d'effort préétablie en fonction des conditions de vol.

3. Procédé selon l'une quelconque des revendications 1 à 2,
**caractérisé en ce que**, ledit moyen d'aide au pilotage (100) comportant au moins un moteur électrique (105) apte à agir sur ladite chaîne cinématique (35) pour générer ledit effort complémentaire :
- on mesure la vitesse de rotation dudit moteur électrique (105) en dérivant la position angulaire de ce moteur électrique (105), et
- on change ladite loi d'effort en fonction de ladite vitesse de rotation.

4. Procédé selon l'une quelconque des revendications 1 à 3,
**caractérisé en ce que**, le giravion étant pourvu d'une installation motrice entraînant ledit rotor via une boite de transmission, des limitations d'utilisation étant imposées pour ladite installation motrice et/ou ladite boite de transmission, on change la loi d'effort lorsque l'on atteint une desdites limitations en passant d'une loi d'effort ayant une pente faible à une loi d'effort ayant une pente importante.

5. Procédé selon l'une quelconque des revendications 1 à 4,
**caractérisé en ce que**, un moyen d'aide au pilotage (100) comportant une pluralité de broches de connexion aptes à accueillir une pluralité de connecteurs différents du giravion, le moyen d'aide au pilotage (100) détermine ladite au moins une loi d'effort en fonction des broches connectées à un connecteur.

6. Procédé selon l'une quelconque des revendications 1 à 5,
**caractérisé en ce que** ledit effort complémentaire étant généré à l'aide d'au moins un moteur électrique (105) sans balai dudit moyen d'aide au pilotage (100), on déconnecte ledit moteur électrique (105) dès que la consommation électrique dépasse un seuil de fonctionnement.

7. Procédé selon l'une quelconque des revendications 1 à 6,
**caractérisé en ce que** l'on détermine l'intensité de consigne à fournir audit moyen d'aide au pilotage (100) selon une commande vectorielle à bande passante élevée.

8. Procédé selon l'une quelconque des revendications 1 à 7,
**caractérisé en ce que**, ledit giravion comportant un moyen de pilotage automatique (90) apte à commander au moins un vérin série (86) de la chaîne cinématique (35), ledit moyen d'aide au pilotage (100) ancre dynamiquement ladite commande de vol (10) lorsque ce moyen de pilotage automatique (90) commande ledit vérin série (86).

9. Procédé selon l'une quelconque des revendications 1 à 8,
**caractérisé en ce que**, ledit giravion comportant un moyen de pilotage automatique (90) apte à commander ledit moyen d'aide au pilotage (100), si un pilote manoeuvre ledit moyen de commande (10) afin de modifier ledit effort instantané d'une valeur prédéterminée, on désengage ledit moyen de pilotage automatique (90) pour que ce moyen de pilotage automatique (90) ne commande plus ledit moyen d'aide au pilotage (100).

10. Procédé selon l'une quelconque des revendications 1 à 9,
**caractérisé en ce que**, ledit giravion comportant un moyen de pilotage automatique (90) apte à commander ledit moyen d'aide au pilotage (100), dans un mode de secours ce moyen de pilotage automatique commande le moyen d'aide au pilotage pour remplir la fonction stabilisation.

11. Procédé selon l'une quelconque des revendications 1 à 10,
**caractérisé en ce que** :
- on détermine un effort généré par ledit moyen d'aide au pilotage (100) à l'aide d'une loi de consommation électrique préétablie donnant ledit effort généré en fonction de la consommation électrique dudit moyen d'aide au pilotage,
- on détermine un effort de friction réel égal à la différence d'un effort instantané exercé sur ladite chaîne cinématique (35) mesuré en temps réel et dudit effort généré,
- on détermine un effort de friction théorique de ladite chaîne cinématique (35) à l'aide d'une loi de friction préétablie,
- on signale une anomalie quand ledit effort de friction réel dépasse ledit effort de friction théorique d'un seuil donné.

12. Procédé selon l'une quelconque des revendications 1 à 11,
**caractérisé en ce que**, ledit moyen d'aide au pilotage (100) comportant un moteur électrique (105) commandé par un moyen de commande (104), ledit moyen de commande (104) étant pourvu d'une unité de calcul principale et d'une unité de calcul de contrôle déterminant chacune ledit effort complémentaire, on désactive ledit moyen d'aide au pilotage si l'effort complémentaire déterminé par ladite unité de calcul principale diffère de l'effort complémentaire déterminé par ladite unité de calcul de contrôle.

13. Dispositif d'aide au pilotage d'un giravion apte à mettre en oeuvre le procédé selon l'une quelconque des revendications précédentes, ledit giravion (G) étant pourvu d'une commande de vol (10) pour commander un rotor (20, 21) via au moins une chaîne cinématique (35) muni d'une pluralité de bielles incluant au moins une bielle intermédiaire (81) et un moyen de liaison (82),
**caractérisé en ce qu'**il comporte :
- un capteur d'effort (88) instantané agencé dans ladite bielle intermédiaire (81),
- un moyen de détermination (89) de la position de ladite commande de vol (10),
- un moyen d'aide au pilotage (100) ayant au moins un moteur électrique (105) commandé par un moyen de commande (104) pour entrainer un arbre de sortie lié en parallèle de ladite chaîne cinématique (35) audit moyen de liaison (82), ledit moyen d'aide au pilotage (100) comportant au moins un premier capteur de position (140) apte à déterminer la position angulaire dudit moteur électrique (105), et/ ou au moins un deuxième capteur de position (150) de l'arbre de sortie (101).

14. Dispositif d'aide au pilotage selon la revendication 13,
**caractérisé en ce qu'**il est muni d'au moins un moyen de pilotage automatique (90) apte à commander le moyen d'aide au pilotage (100).

15. Dispositif d'aide au pilotage selon l'une quelconque des revendications 13 à 14,
**caractérisé en ce qu'**il est pourvu d'une unité de friction (85) agencée entre ledit moyen de commande (100) et ledit vérin série (86) pour générer un effort de friction supérieur à l'effort de friction de la chaîne cinématique entre ledit vérin série (86) et ledit rotor (20, 21).

16. Dispositif d'aide au pilotage selon l'une quelconque des revendications 13 à 15,
**caractérisé en ce que**, ledit giravion (G) étant pourvu d'au moins deux chaînes cinématiques (35) muni d'une pluralité de bielles incluant au moins une bielle intermédiaire (81) et un moyen de liaison (82, 83), le dispositif d'aide au pilotage comporte :
- un capteur d'effort (88) instantané par chaîne cinématique agencé dans ladite bielle intermédiaire (81) de la chaîne cinématique associée,
- un moyen d'aide au pilotage (100) par chaîne cinématique lié, en parallèle à ladite chaîne cinématique (35) associée, à un moyen de liaison (82, 83).

17. Dispositif d'aide au pilotage selon l'une quelconque des revendications 13 à 16,
**caractérisé en ce que**, ledit moteur électrique (105) étant lié à un arbre de sortie (101) via successivement un réducteur (102) puis un moyen fusible (103), ledit moyen fusible (103) comporte :
- une première roue (111) munie de dentures (112) sur une périphérie externe qui coopèrent avec ledit réducteur (102) et de crabots menants (113) sur une périphérie interne, lesdits crabots menant (113) étant aptes à se déplacer axialement par rapport audit réducteur (102),
- des crabots menés (120), agencés sur ledit arbre de sortie (101), apte à coopérer avec lesdits crabots menants (113),
- une bobine électrique (130) fixe pour attirer lesdits crabots menants (113) contre lesdits crabots menés (120) lorsqu'elle est alimentée électriquement par un moyen de commande (104).

## Claims

1. Method of assisting the piloting of a rotorcraft, said rotorcraft having a flight control (10) for controlling a rotor (20, 21) via at least one kinematic linkage (35),
in which method, in order to generate an additional force with the help of piloting assistance means (100) arranged in parallel with said kinematic linkage (35) and also as a function of a setpoint force relating to the position of said flight control (10) and an instantaneous force measured on said kinematic linkage (35):
- an instantaneous force exerted on said kinematic linkage (35) is measured in real time,
- the position of said flight control (10) is measured,
- using at least one preset force relationship, a setpoint force that is to be felt by a pilot operating said flight control (10) when this flight control (10) is at said measured position is determined, and then said additional force equal to the difference between the setpoint force and the instantaneous force is determined,
- the setpoint intensity to be delivered to said piloting assistance means (100) in order to cause said piloting assistance means (100) to generate said additional force is determined, and then said piloting assistance means (100) is electrically powered in accordance with said setpoint intensity.

2. Method according to Claim 1,
**characterised in that** the preset force relationship is changed as a function of flying conditions.

3. Method according to any one of Claims 1 to 2, **characterised in that**, for said piloting assistance means (100) comprising at least one electric motor (105) suitable for acting on said kinematic linkage (35) to generate said additional force:
- the speed of rotation of said electric motor (105) is measured by differentiating the angular position of this electric motor (105), and
- said force relationship is changed as a function of said speed of rotation.

4. Method according to any one of Claims 1 to 3,
**characterised in that**, for the rotorcraft being provided with a power plant driving said rotor via a gearbox, with utilisation limits being imposed for said power plant and/or said gearbox, the force relationship is changed on reaching one of said limitations by changing from a force relationship having shallow slope to a force relationship having a steep slope.

5. Method according to any one of Claims 1 to 4,
**characterised in that**, for piloting assistance means (100) having a plurality of connection pins suitable for receiving a plurality of different connectors of the rotorcraft, the piloting assistance means (100) determine said at least one force relationship as a function of the pins connected to a connector.

6. Method according to any one of Claims 1 to 5,
**characterised in that**, for said additional force being generated with the help of at least one brushless electric motor (105) of said piloting assistance means (100), said electric motor (105) is disconnected as soon as the electricity consumption exceeds an operating threshold.

7. Method according to any one of Claims 1 to 6,
**characterised in that** the setpoint intensity for supplying to said piloting assistance means (100) is determined by using a high-bandwidth vector control.

8. Method according to any one of Claims 1 to 7,
**characterised in that**, for said rotorcraft comprising autopilot means (90) suitable for controlling at least one series actuator (86) in the kinematic linkage (35), said piloting assistance means (100) anchors said flight control (10) dynamically when the autopilot means (90) operate said series actuator (86).

9. Method according to any one of Claims 1 to 8,
**characterised in that**, for said rotorcraft comprising autopilot means (90) suitable for controlling said piloting assistance means (100), if a pilot operates said control means (10) so as to modify said instantaneous force by a predetermined value, said autopilot means (90) are disengaged so that the autopilot means (90) no longer control said piloting assistance means (100).

10. Method according to any one of Claims 1 to 9,
**characterised in that**, for said rotorcraft comprising autopilot means (90) suitable for controlling said piloting assistance means (100), in an emergency mode the autopilot means control the piloting assistance means to perform the stabilising function.

11. Method according to any one of Claims 1 to 10,
**characterised in that**:
- a force generated by said piloting assistance means (100) is determined using a preset electricity consumption relationship giving said generated force as a function of the electricity consumption of said piloting assistance means,
- a real friction force equal to the difference between an instantaneous force exerted on said kinematic linkage (35) measured in real time and said generated force is determined,
- a theoretical friction force for said kinematic linkage (35) is determined using a preset friction relationship,
- an anomaly is signalled when said real friction force exceeds said theoretical friction force by a given threshold.

12. Method according to any one of Claims 1 to 11,
**characterised in that**, for said piloting assistance means (100) comprising an electric motor (105) controlled by control means (104), said control means (104) being provided with a main computer unit and with a monitoring computer unit, each determining said additional force, said piloting assistance means are deactivated if the additional force determined by said main computer unit differs from the additional force determined by said monitoring computer unit.

13. Device for assisting the piloting of a rotorcraft suitable for implementing the method according to any one of the preceding claims, said rotorcraft (G) being provided with a flight control (10) for controlling a rotor (20, 21) via at least one kinematic linkage (35) provided with a plurality of rods including at least one intermediate rod (81) and link means (82),
**characterised in that** the device comprises:
- an instantaneous force sensor (88) arranged in said intermediate rod (81),
- determination means (89) for determining the position of said flight control (10),
- piloting assistance means (100) having at least one electric motor (105) controlled by control means (104) to drive an output shaft connected to said link means (82) in parallel with said kinematic linkage (35), said piloting assistance means (100) comprising at least one first position sensor (140) suitable for determining the angular position of said electric motor (105), and/or at least one second position sensor (150) for sensing the position of the output shaft (101).

14. Piloting assistance device according to Claim 13,
**characterised in that** it is provided with at least one autopilot means (90) suitable for controlling the piloting assistance means (100).

15. Piloting assistance device according to any one of Claims 13 to 14,
**characterised in that** it is provided with a friction unit (85) arranged between said control means (100) and said series actuator (86) to generate a friction force greater than the friction force of the kinematic linkage between said series actuator (86) and said rotor (20, 21).

16. Piloting assistance device according to any one of Claims 13 to 15,
**characterised in that**, for said rotorcraft (G) being provided with at least two kinematic linkages (35) provided with a plurality of rods including at least one intermediate rod (81) and link means (82, 83), the piloting assistance device comprises:
- one instantaneous force sensor (88) per kinematic linkage, arranged in said intermediate rod (81) of the associated kinematic linkage,
- one piloting assistance means (100) per kinematic linkage, linked, in parallel with said associated kinematic linkage (35), to link means (82, 83).

17. Piloting assistance device according to any one of Claims 13 to 16,
**characterised in that**, for said electric motor (105) being connected to an output shaft (101) successively via reduction gearing (102) and then fusible means (103), said fusible means (103) comprise:
- a first wheel (111) provided with teeth (112) on an outer periphery which co-operate with said reduction gearing (102), and with driving teeth (113) on an inner periphery, said driving teeth (113) being suitable for moving axially relative to said reduction gearing (102),
- driven teeth (120) arranged on said output shaft (101), suitable for co-operating with said driving teeth (113),
- a stationary electrical coil (130) for attracting said driving teeth (113) against said driven teeth (120) when it is electrically powered by control means (104).

## Patentansprüche

1. Steuerungshilfsverfahren für ein Drehflügelflugzeug, wobei das Drehflügelflugzeug eine Flugsteuerung (10) zur Steuerung eines Rotors (20, 21) über mindestens eine kinematische Kette (35) aufweist,
wobei zur Erzeugung einer zusätzlichen Kraft mit Hilfe eines Steuerungshilfsmittels (100), welches parallel zu der kinematischen Kette (35) angeordnet ist, sowie in Abhängigkeit von einer Soll-Kraft relativ zur Position der Flugsteuerung (10) und von einer augenblicklich an der kinematischen Kette (35) gemessenen Kraft:
- eine augenblicklich auf die kinematische Kette (35) ausgeübte Kraft in Echtzeit gemessen wird,
- die Position der Flugsteuerung (10) gemessen wird,
- mit Hilfe mindestens eines vorher festgelegten Kraftgesetzes eine Soll-Kraft bestimmt wird, die ein die Flugsteuerung (10) bedienender Pilot spüren muss, während diese Flugsteuerung (10) in der gemessenen Stellung ist, und anschließend die zusätzliche Kraft bestimmt wird, die gleich der Differenz zwischen der Soll-Kraft und der augenblicklichen Kraft ist,
- die Soll-Stärke bestimmt wird, die an das Steuerungshilfsmittel (100) zu liefern ist, damit das Steuerungshilfsmittel (100) die zusätzliche Kraft erzeugt, und dann das Steuerungshilfsmittel (100) gemäß der Soll-Stärke mit elektrischer Energie gespeist wird.

2. Verfahren nach Anspruch 1,
**dadurch gekennzeichnet, dass** das vorher festgelegte Kraftgesetz in Abhängigkeit von den Flugbedingungen geändert wird.

3. Verfahren nach einem der Ansprüche 1 oder 2,
**dadurch gekennzeichnet, dass** das Steuerungshilfsmittel (100) mindestens einen Elektromotor (105) aufweist, der auf die kinematische Kette (35) einwirken kann, um die zusätzliche Kraft zu erzeugen, und
- die Drehgeschwindigkeit des Elektromotors (105) gemessen wird, indem man die Winkelstellung des Elektromotors (105) ableitet, und
- das Kraftgesetz in Abhängigkeit von der Drehgeschwindigkeit geändert wird.

4. Verfahren nach einem der Ansprüche 1 bis 3,
**dadurch gekennzeichnet, dass** das Drehflügelflugzeug mit einer Antriebsanlage versehen ist, die den Rotor über ein Getriebe antreibt, wobei die Nutzungsbeschränkungen für die Antriebsanlage und/oder das Getriebe vorgegeben sind und das Kraftgesetz geändert wird, wenn eine der Beschränkungen erreicht wird, indem von einem Kraftgesetz mit einer schwachen Neigung übergegangen wird auf ein Kraftgesetz mit einer starken Neigung.

5. Verfahren nach einem der Ansprüche 1 bis 4,
**dadurch gekennzeichnet, dass** ein Steuerungshilfsmittel (100) eine Mehrzahl von Verbindungsstiften, die eine Mehrzahl von verschiedenen Verbindern des Drehflügelflugzeugs aufnehmen können, aufweist, wobei das Steuerungshilfsmittel (100) das mindestens eine Kraftgesetz in Abhängigkeit von den mit einem Verbinder verbundenen Verbindungsstiften bestimmt.

6. Verfahren nach einem der Ansprüche 1 bis 5,
**dadurch gekennzeichnet, dass** die zusätzliche Kraft mit Hilfe mindestens eines bürstenlosen Elektromotors (105) des Steuerungshilfsmittels (100) erzeugt wird, und der Elektromotor (105) abgeschaltet wird, sobald der Stromverbrauch eine Betriebsschwelle
übersteigt.

7. Verfahren nach einem der Ansprüche 1 bis 6,
**dadurch gekennzeichnet, dass** die Sollstärke, die an das Steuerungshilfsmittel (100) zu liefern ist, gemäß einer Vektorsteuerung großer Durchlassbandbreite bestimmt wird.

8. Verfahren nach einem der Ansprüche 1 bis 7,
**dadurch gekennzeichnet, dass** das Drehflügelflugzeug ein Mittel zur Selbststeuerung (90) aufweist, welches mindestens einen Reihenzylinder (86) der kinematischen Kette (35) steuern kann, wobei das Steuerungshilfsmittel (100) dynamisch die Flugsteuerung (10) verankert, wenn das Mittel zur Selbststeuerung (90) den Reihenzylinder (86) steuert.

9. Verfahren nach einem der Ansprüche 1 bis 8,
**dadurch gekennzeichnet, dass** das Drehflügelflugzeug ein Mittel zur Selbststeuerung (90) aufweist, welches das Steuerungshilfsmittel (100) steuern kann, und wenn ein Pilot das Steuerungsmittel (10) betätigt, um die augenblickliche Kraft mit einem vorgegebenen Wert zu verändern, das Mittel zur Selbststeuerung (90) entkoppelt wird, damit das Mittel zur Selbststeuerung (90) nicht mehr das Steuerungshilfsmittel (100) steuert.

10. Verfahren nach einem der Ansprüche 1 bis 9,
**dadurch gekennzeichnet, dass** das Drehflügelflugzeug ein Mittel zur Selbststeuerung (90) aufweist, welches das Steuerungshilfsmittel (100) steuern kann, wobei in einem Sicherheitsmodus dieses Mittel zur Selbststeuerung das Steuerungshilfsmittel steuert, um die Funktion der Stabilisation zu erfüllen.

11. Verfahren nach einem der Ansprüche 1 bis 10,
**dadurch gekennzeichnet, dass**
- eine Kraft bestimmt wird, die erzeugt wird durch das Steuerungshilfsmittel (100) mit Hilfe eines vorher festgelegten Stromverbrauchsgesetzes, welches die erzeugte Kraft in Abhängigkeit von dem Stromverbrauch des Steuerungshilfsmittels angibt,
- eine Ist-Reibungskraft bestimmt wird, die gleich ist der Differenz zwischen einer augenblicklich auf die kinematische Kette (35) wirkenden, in Echtzeit gemessenen, augenblicklichen Kraft und der erzeugten Kraft,
- die theoretische Reibungskraft der kinematischen Kette (35) mit Hilfe eines vorher festgelegten Reibungsgesetzes bestimmt wird,
- eine Anomalie angezeigt wird, wenn die tatsächliche Reibungskraft die theoretische Reibungskraft bei einem vorgegebenen Schwellenwert überschreitet.

12. Verfahren nach einem der Ansprüche 1 bis 11,
**dadurch gekennzeichnet, dass** das Steuerungshilfsmittel (100) einen Elektromotor (105) aufweist, der durch ein Steuermittel (104) gesteuert wird, wobei das Steuermittel (104) eine Hauptrecheneinheit und eine Einheit zur Berechnung der Steuerung aufweist, die jeweils die zusätzliche Kraft bestimmen, wobei man das Steuerungshilfsmittel deaktiviert, wenn die durch die Hauptrecheneinheit bestimmte zusätzliche Kraft von der von der Einheit zur Berechnung der Steuerung bestimmten komplementären Kraft abweicht.

13. Steuerungshilfsvorrichtung für ein Drehflügelflugzeug, welches geeignet ist, das Verfahren nach einem der vorstehenden Ansprüche anzuwenden, wobei das Drehflügelflugzeug (G) eine Flugsteuerung (10) aufweist zur Steuerung eines Rotors (20, 21) über mindestens eine kinematische Kette (35), die mit einer Mehrzahl von Steuerstangen einschließlich mindestens einer Zwischensteuerstange (81) und einem Verbindungsmittel (82) versehen ist,
**dadurch gekennzeichnet, dass** sie aufweist:
- einen Sensor (88) zur Erfassung der augenblicklichen Kraft, der in der Zwischensteuerstange (81) angeordnet ist,
- ein Mittel (89) zur Bestimmung der Position der Flugsteuerung (10),
- ein Steuerungshilfsmittel (100) mit mindestens einem Elektromotor (105), der durch ein Steuermittel (104) gesteuert wird, um eine Ausgangswelle anzutreiben, die parallel zur kinematischen Kette (35) mit dem Verbindungsmittel (82) verbunden ist, wobei das Steuerungshilfsmittel (100) mindestens einen ersten Positionserfassungssensor (140) aufweist, der die Winkelstellung des Elektromotors (105) bestimmen kann und/oder mindestens einen zweiten Positionssensor (150) für die Ausgangswelle (101).

14. Steuerungshilfsvorrichtung nach Anspruch 13,
**dadurch gekennzeichnet, dass** es mit mindestens einem Mittel zur Selbststeuerung (90) versehen ist, welches das Steuerungshilfsmittel (100) steuern kann.

15. Steuerungshilfsvorrichtung nach einem der Ansprüche 13 oder 14,
**dadurch gekennzeichnet, dass** es mit einer Reibungseinheit (85) versehen ist, welche zwischen dem Steuermittel (100) und dem Reihenzylinder (86) angeordnet ist, um eine Reibungskraft zu erzeugen, die größer ist als die Reibungskraft der kinematischen Kette zwischen dem Reihenzylinder (86) und dem Rotor (20, 21).

16. Steuerungshilfsvorrichtung nach einem der Ansprüche 13 bis 15,
**dadurch gekennzeichnet, dass** das Drehflügelflugzeug (G) mit mindestens zwei kinematischen Ketten (35) versehen ist, mit einer Mehrzahl von Steuerstangen einschließlich mindestens einer Zwischensteuerstange (81) und einem Verbindungsmittel (82, 83), wobei die Steuerungshilfsvorrichtung aufweist:
- einen Sensor (88) zur Erfassung der augenblicklichen, von der kinematischen Kette ausgeübten Kraft, der in der Zwischensteuerstange (81) der zugehörigen kinematischen Kette angeordnet ist,
- ein Steuerungshilfsmittel (100) mit einer kinematischen Kette, die parallel zu der zugehörigen kinematischen Kette (35) mit einem Verbindungsmittel (82, 83) verbunden ist,

17. Steuerungshilfsvorrichtung nach einem der Ansprüche 13 bis 16,
**dadurch gekennzeichnet, dass** der Elektromotor (105) mit einer Ausgangswelle (101) über aufeinanderfolgend ein Reduziergetriebe (102) und ein Sicherungsmittel (103) verbunden ist, wobei das Sicherungsmittel (103) aufweist:
- ein erstes Rad (111), welches mit Zähnen (112) auf seinem äußeren Umfang versehen ist, die mit dem Reduziergetriebe (102) zusammenwirken, und mit Führungsschaltklauen (113) auf einem Innenumfang, wobei die Führungsschaltklauen (113) sich axial bezüglich des Reduktionsgetriebes (102) verschieben können,
- geführte Schaltklauen (120), die auf der Ausgangswelle (101) angeordnet sind, und mit den Führungsschaltklauen (113) zusammenwirken können,
- eine fest angebrachte elektrische Spule (130) zum Anziehen der Führungsschaltklauen (113) in Richtung auf die geführten Schaltklauen (120), wenn die elektrische Spule durch ein Steuermittel (104) mit Strom versorgt wird.
